# EUROPÄISCHE PATENTSCHRIFT

(11) **EP 2 281 700 B1**
(45) Veröffentlichungstag und Bekanntmachung des Hinweises auf die Patenterteilung: **16.10.2013**
(21) Anmeldenummer: 10172127.2
(22) Anmeldetag: 06.08.2010
(51) Int. Cl.: B60D 1/64, B60T 17/04

(54) **Kupplungskopf zur pneumatischen Verbindung der Bremsanlagen eines Zugfahrzeugs und eines Anhängers mit Lippenventil**
Coupling head for pneumatic connection of braking systems on a traction vehicle and a trainer with lip valve
Tête d'accouplement pour la liaison pneumatique des dispositifs de freinage d'un véhicule et d'une remorque dotée d'une soupape à bec

(30) Priorität: 07.08.2009 DE 102009036619
(43) Veröffentlichungstag der Anmeldung: 09.02.2011
(73) Patentinhaber: KNORR-BREMSE Systeme für Nutzfahrzeuge GmbH, 80809 München (DE)
(72) Erfinder: Muser, Michael, 85276 Pfaffenhofen (DE); Koncz, László, 6000 Kecskemét (HU); Dali, István, 6000 Kecskemét (HU); Papp, Lajos, 6100 Kiskunfélegyháza (HU)
(74) Vertreter: Schönmann, Kurt

(56) Entgegenhaltungen:
- EP-A2- 2 141 055
- FR-A1- 2 830 500
- GB-A- 2 446 948

## Beschreibung

### Stand der Technik

Die Erfindung geht aus von einem Kupplungskopf zur pneumatischen Verbindung der Bremsanlagen eines Zugfahrzeugs und eines Anhängers, mit einer Filtereinrichtung zur Filterung von zwischen zwei Anschlüssen strömender Druckluft, welche einen im Gehäuse des Kupplungskopfes integrierten Filtereinsatz sowie eine Ventileinrichtung aufweist, welche bei einer ein vorgegebenes Maß von Verunreinigung übersteigenden Verunreinigung des Filtereinsatzes eine Bypassverbindung zwischen den beiden Anschlüssen unter Umgehung des Filtereinsatzes herstellt, gemäß dem Oberbegriff von Anspruch 1.

Ein gattungsgemäßer Kupplungskopf ist aus der GB 2 446 948 A und der DE 199 31 162 A1 bekannt. Der Filtereinsatz schützt die Druckluft-Bremsanlage sowohl im Zugfahrzeug als auch im Anhänger vor Verschmutzung. Bei Verwendung im Anhänger sind derartige Leitungsfilter im Kupplungskopf "Vorrat" bzw. "Bremse" angeordnet. Eine Verwendung im Anhänger ist erforderlich, weil Kupplungsköpfe von Anhängern im Gegensatz zu denjenigen von Zugfahrzeugen kein Absperrglied aufweisen, welches im entkuppelten Zustand ein Schließen der pneumatischen Leitung bewirkt. Der Filtereinsatz ist dabei topfförmig ausgebildet und öffnet gegen die Kraft einer vorspannenden Druckfeder, um die Bypass- bzw. Kurzschlussströmungsverbindung freizugeben, wenn das Material des Filters durch verunreinigende Partikel verstopft sein sollte. Eine derartige Wirkungsweise hat zur Folge, dass bei einem selbsttätigen Öffnen der Kurzschlussverbindung zumindest kurzzeitig verunreinigte Druckluft für den Druckluftvorrat bzw. die Bremsleitung des Anhängers in Kauf genommen wird, da hier Sicherheitsbestimmungen vorrangig sind. Wünschenswert ist weiterhin, wenn eine solche Kurzschlussverbindung in beiden Strömungsrichtungen vorhanden ist.

Hierzu ist der topfförmige Filtereinsatz des bekannten Kupplungskopfes durch Druckfedern ähnlich wie bei einem Doppelsitzventil als Ventilkörper gegen zwei Ventilsitze vorgespannt, wobei der Filtereinsatz nur bei einem oberhalb eines vorgegebenen Werts liegenden Druck der Druckluft je nach Strömungsrichtung von dem einen oder von dem anderen Ventilsitz abhebt, um einen Strömungsquerschnitt für die Kurzschlussverbindung frei zu geben.

Aufgrund der linearen Beweglichkeit des Filtereinsatzes und der ihn vorspannenden Druckfedern muss das Gehäuse des Kupplungskopfes relativ groß bauen. Weiterhin ist eine verkantungssichere Führung für den Filtereinsatz im Gehäuse vorzusehen. Dies bedingt eine relativ teure Herstellung des Kupplungskopfes.

Bedingt durch Verschmutzungen der Führung des Filtereinsatzes im Gehäuse und der dadurch variablen Reibungskräfte ist nicht zuletzt die Größe der Losbrechkraft nicht immer konstant, so dass eine zuverlässiges Öffnen der Ventileinrichtung bei einem definierten Staudruck nicht gegeben ist.

Der vorliegenden Erfindung liegt die Aufgabe zugrunde, einen Kupplungskopf der eingangs erwähnten Art derart weiter zu entwickeln, dass die oben genannten Nachteile vermieden werden.

Diese Aufgabe wird erfindungsgemäß durch die kennzeichnenden Merkmale von Anspruch 1 gelöst.

### Vorteile der Erfindung

Die Erfindung basiert auf dem Gedanken, dass die Ventileinrichtung wenigstens eine mit einem Ventilsitz zusammen wirkende elastische Ventillippe beinhaltet, welche bei durchgängigem Filtereinsatz gegen den Ventilsitz dichtet und welche bei einer das vorgegebene Maß von Verunreinigung übersteigenden Verunreinigung des Filtereinsatzes aufgrund elastischer Verformung bedingten Abhebens vom Ventilsitz einen Strömungsquerschnitt für die Druckluft freigibt.

Mit anderen Worten beinhaltet die Ventileinrichtung wenigstens eine mit einem Ventilsitz zusammen wirkende elastische Ventillippe, welche bei einem auf sie wirkenden Staudruck der Druckluft bis maximal einem vorgegebenen Wert gegen den Ventilsitz dichtet und nur bei einem oberhalb des vorgegebenen Werts liegenden Staudruck der Druckluft aufgrund elastischer Verformung bedingten Abhebens vom Ventilsitz einen Strömungsquerschnitt für die Druckluft freigibt.

Solche in einem Strömungsweg angeordneten sog. Lippenventile sind in der Regel einfach und kostengünstig herstellbar. Weil das einzige bewegte Teil die elastische Dichtlippe darstellt und die Elastizität bedingt durch Material (Materialsteifigkeit) und/oder Formgebung (Formsteifigkeit) auch für längere Zeit konstant ist, wird ein zuverlässiges Öffnen der Ventileinrichtung bei einem definierten Staudruck gewährleistet.

Durch die in den Unteransprüchen aufgeführten Maßnahmen sind vorteilhafte Weiterbildungen und Verbesserungen der in Patentanspruch 1 angegebenen Erfindung möglich.

Besonders bevorzugt ist der Ventilsitz am Filtereinsatz ausgebildet. Dadurch sind keine weiteren Bauteile zur Ausbildung des Ventilsitzes notwendig.

Gemäß einer weiteren Maßnahme weist die Ventileinrichtung wenigstens zwei Ventile auf, wobei das eine Ventil eine Ventillippe beinhaltet, um eine Bypassverbindung zwischen dem einen Anschluss und dem anderen Anschluss herzustellen und das andere Ventil eine andere Ventillippe, um in einer demgegenüber entgegen gesetzten Strömungsrichtung eine Bypassverbindung zwischen dem anderen Anschluss und dem einen Anschluss herzustellen.

Die eine Ventillippe und die andere Ventillippe sind bevorzugt mit einem ringförmigen Ventillippenträger aus Elastomer einstückig ausgebildet und ragen von einer zum Filtereinsatz weisenden Stirnfläche des Ventillippenträgers senkrecht weg.

Der Filtereinsatz weist beispielsweise einen Rahmen mit einem kopfseitigen Ring auf, dessen radial äußere Umfangsfläche als Ventilsitz mit der einen Ventillippe des einen Ventils und dessen radial innere Umfangsfläche als Ventilsitz mit der anderen Ventillippe des anderen Ventils zusammen wirkt. Bei dem Filtereinsatz kann es sich beispielsweise um einen bekannten und handelsüblichen Filtereinsatz des Stands der Technik handeln, welcher diese Anforderungen erfüllt.

Bezogen auf den Ventillippenträger ist die eine Ventillippe des einen Ventils bevorzugt eine radial äußere Ventillippe und die andere Ventillippe des anderen Ventils eine radial innere Ventillippe, wobei die Ventillippen in Umfangsrichtung gesehen kreisbogenförmig ausgebildet sind.

Weiterhin ist eine zentrale Öffnung des ringförmigen Ventillippenträgers koaxial mit dem einen Anschluss und dem Ring des Rahmens des Filtereinsatzes angeordnet.

Der Filtereinsatz ist beispielsweise in einem Sackloch des Gehäuses gehalten ist, in welches der andere Anschluss seitlich mündet, wobei zwischen einer radial äußeren Umfangsfläche des Filtereinsatzes und einer radial inneren Umfangsfläche des Sacklochs ein Ringkanal ausgebildet ist, welcher mit dem anderen Anschluss kommuniziert.

Dann kann bei von dem einen Ventilsitz abgehobener Ventillippe des einen Ventils der eine Anschluss über den Ringkanal mit dem anderen Anschluss und bei von dem anderen Ventilsitz abgehobener Ventillippe des anderen Ventils der andere Anschluss über den Ringkanal mit dem einen Anschluss in Strömungsverbindung stehen.

Wenn dann der Ventillippenträger zwischen dem kopfseitigen Ring des Rahmens des Filtereinsatzes und einem Deckel des Gehäuses gehalten ist, sind außer dem Ventillippenträger keine weitere Bauteile notwendig, um die beiden Ventile der Ventileinrichtung zu realisieren.

Genaueres geht aus der folgenden Beschreibung der Ausführungsbeispiele hervor.

### Zeichnungen

Nachstehend ist ein Ausführungsbeispiel der Erfindung in der Zeichnung dargestellt und in der nachfolgenden Beschreibung näher erläutert. In der Zeichnung zeigt
- Fig.1: eine teilweise Schnittdarstellung durch einen Kupplungskopf gemäß einer bevorzugten Ausführungsform der Erfindung mit zwei Bypass- ventilen;
- Fig.2: eine perspektivische Darstellung eines Ventillippenträgers;
- Fig.3: den Kupplungskopf gemäß Fig.1 mit geöffnetem einem Bypassventil;
- Fig.4: den Kupplungskopf gemäß Fig.1 mit geöffnetem anderem Bypass- ventil.

### Beschreibung des Ausführungsbeispiels

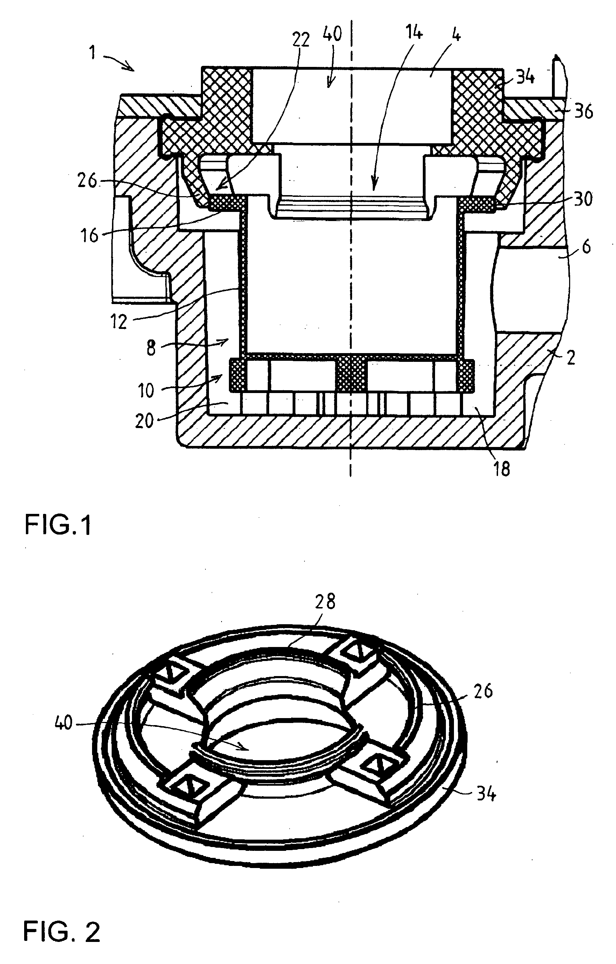

Die in Fig.1 insgesamt mit 1 bezeichnete und nur teilweise dargestellte Ausführungsform eines Kupplungskopfes weist ein Gehäuse 2 auf, an welchem in beispielsweise aus DE 199 31 162 A1 bekannter Weise eine hier nicht sichtbare weil im Zusammenhang mit der Erfindung nicht interessierende Klaue und eine Führungsleiste ausgebildet sind. Mit Hilfe der Klaue und der Führungsleiste kann der Kupplungskopf 1 mit einem weiteren Kupplungskopf gekuppelt werden.

Bei Kupplungsköpfen 1 der beispielhaft wiedergegebenen Ausführungsform ist im allgemeinen in einem der Kupplungsköpfe ein Absperrglied vorgesehen, im allgemeinen ist dies der Kupplungskopf am Zugfahrzeug. Der in Fig.1 wieder gegebene Kupplungskopf 1 ist ohne ein derartiges Absperrglied gezeigt und für einen Anhänger vorgesehen.

Der Kupplungskopf 1 weist einen Anschluss 4 als Energiezufluss und einen anderen Anschluss 6 als Energieabfluss auf. Bei einem derartigen Aufbau wird Druckluft vom nicht dargestellten Gegenkupplungskopf in den einen Anschluss 4 geleitet und verlässt den Kupplungskopf 1 durch den anderen Anschluss 6 als Energieabfluss. Grundsätzlich ist die Strömungsrichtung der Druckluft auch umkehrbar, derart, dass die Druckluft von dem anderen Anschluss 6 nach Passieren des Kupplungskopfes 1 den einen Anschluss 4 als Energieabfluss verlässt und in den Gegenkupplungskopf geführt wird.

Das dargestellte Ausführungsbeispiel gibt einen vorzugsweise für Anhänger verwendeten Kupplungskopf 1 wieder, bei welchem Druckluft vom Zugfahrzeug durch den einen Anschluss 4 als Energiezufluss in den Kupplungskopf 1 gelangt und diesen durch den anderen Anschluss 6 als Energieabfluss verlässt. Nachdem Kupplungsköpfe 1 der in Rede stehenden Art zur Verbindung von Vorratsleitungen und Bremsleitungen dienen, ist mit der Bezeichnung Druckluft einerseits Vorrats-Druckluft und andererseits Bremsleitungs-Druckluft bezeichnet.

Gemäß Fig.1 befindet sich im Inneren des Gehäuses 2 des Kupplungskopfes 1 ein topfförmiger Filtereinsatz 8 mit einem Rahmen 10, an welchem ein Sieb 12 aufgebracht ist, derart, dass die den Kupplungskopf 1 von dem einen Anschluss 4 zu dem anderen Anschluss 6 (bzw. umgekehrt) durchströmende Luft das Sieb 12 passieren muss. Es kann sich bei dem Sieb 12 um ein an sich bekanntes, z.B. aus Kunststoff bestehendes, feinmaschiges Filtermaterial handeln, welches mit Rahmenteilen des Rahmens 10 des Filtereinsatzes 8 verklebt ist oder mit diesen Teilen als Folge von Wärmebehandlung verschmolzen ist. Vorzugsweise weist das Kopfende des Filtereinsatzes 8 eine zentrale Öffnung 14 auf, d.h. am Kopfende des Filtereinsatzes 8 ist ein Ring 16 des Rahmens 10 ausgebildet, während der Boden des Filtereinsatzes 8 in gleicher Weise wie die seitlichen Fenster des Rahmens 10 durch das Sieb 12 überdeckt sind. Die zentrale Öffnung 14 des kopfseitigen Rings 16 des Rahmens 10 des Filtereinsatzes 8 steht mit dem einen Anschluss 4 in Strömungsverbindung. Der Filtereinsatz 8 ist in einem Sackloch 18 des Gehäuses 2 gehalten, in welches der andere Anschluss 6 seitlich mündet. Zwischen einer radial äußeren Umfangsfläche des Filtereinsatzes 8 und einer radial inneren Umfangsfläche des Sacklochs 18 ist ein Ringkanal 20 vorgesehen, welcher mit dem anderen Anschluss 6 kommuniziert.

Der Kupplungskopf 1 weist weiterhin eine Ventileinrichtung auf, welche bei einer ein vorgegebenes Maß von Verunreinigung übersteigenden Verunreinigung des Filtereinsatzes 8 eine Bypassverbindung zwischen den beiden Anschlüssen 4, 6 bzw. 6, 4 unter Umgehung des Filtereinsatzes 8 herstellt.

Hierzu weist die Ventileinrichtung beispielsweise zwei Ventile 22, 24 auf, wobei das eine Ventil 22 eine Ventillippe 26 beinhaltet, um eine Bypassverbindung zwischen dem einen Anschluss 4 und dem anderen Anschluss 6 herzustellen und das andere Ventil 24 eine andere Ventillippe 28, um in einer demgegenüber entgegen gesetzten Strömungsrichtung eine Bypassverbindung zwischen dem anderen Anschluss 6 und dem einen Anschluss 4 herzustellen.

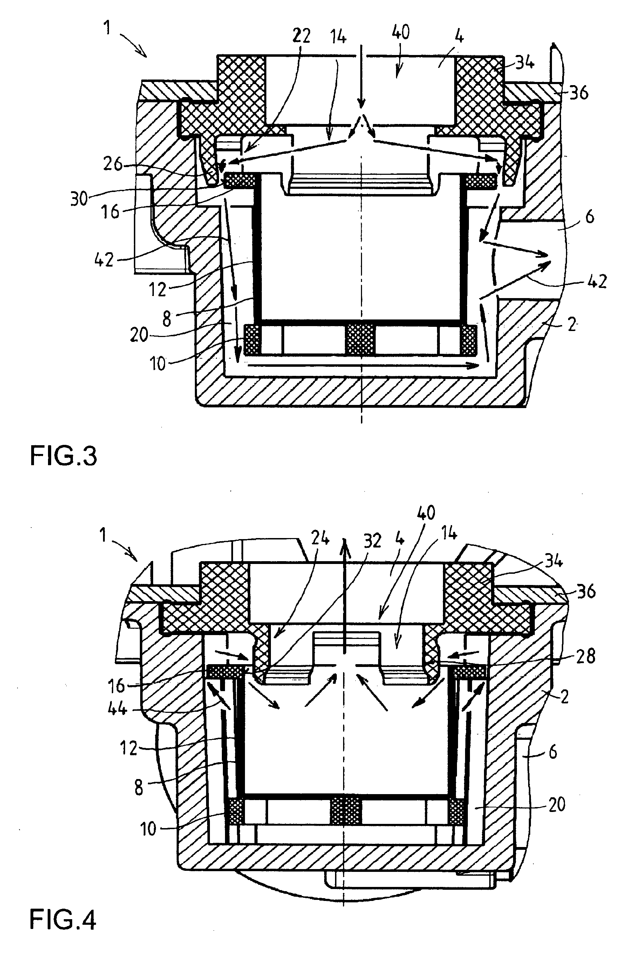

Aufgrund der Lage der Ventillippen 26, 28 in unterschiedlichen Schnittebenen ist das eine Ventil 22 nur in der Schnittdarstellung von Fig.1 und Fig.3 und das andere Ventil nur in der Schnittdarstellung von Fig.4 sichtbar.

Die Ventillippen 26, 28 sind ausgebildet, dass sie bei einem auf sie wirkenden Staudruck der Druckluft bis maximal einem vorgegebenen Wert gegen einen zugeordneten Ventilsitz 30, 32 dichten, aber bei einem oberhalb des vorgegebenen Werts liegenden Staudruck der Druckluft aufgrund elastischer Verformung bedingten Abhebens vom zugeordneten Ventilsitz 30, 32 einen Strömungsquerschnitt für die Druckluft freigeben.

Dabei sind die eine Ventillippe 26 und die andere Ventillippe 28 bevorzugt mit einem ringförmigen Ventillippenträger 34 aus einem elastischen Material, bevorzugt aus einem Elastomer einstückig ausgebildet, welcher in dem Gehäuse 2 gehalten ist. Insbesondere ist der Ventillippenträger 34 zwischen dem kopfseitigen Ring 16 des Rahmens 10 des Filtereinsatzes 8 und einem Deckel 36 des Gehäuses 2 unmittelbar angeordnet und eingespannt gehalten.

Alternativ könnten der Ventillippenträger 34 und die Ventillippen 26, 28 auch getrennte Teile bilden, wobei beispielsweise nur die Ventillippen 26, 28 die geforderten elastischen Eigenschaften aufweisen und der Ventillippenträger 34 demgegenüber starr ist.

Wie aus der Einzelansicht des Ventillippenträgers 34 von Fig.2 hervorgeht, ragen die Ventillippen 26, 28 beispielsweise von einer zum Filtereinsatz 8 weisenden Stirnfläche des ringförmigen Ventillippenträgers 34 senkrecht weg, wobei bezogen auf den Ventillippenträger 34 die eine Ventillippe 26 eine radial äußere Ventillippe und die andere Ventillippe 28 eine radial innere Ventillippe ist und die Ventillippen 26, 28 in Umfangsrichtung gesehen kreisbogenförmig ausgebildet und zueinander versetzt angeordnet sind. In Umfangsrichtung gesehen schließen sich die einen Ventillippen 26 dabei den anderen Ventillippen 28 an, wenn auch auf einem jeweils anderen Radius.

Der Ventillippenträger 34 ist dabei bevorzugt koaxial mit dem einen Anschluss 4 und dem Ring 16 des Rahmens 10 des Filtereinsatzes 8 angeordnet, wobei eine zentrale Öffnung 40 des Ventillippenträgers 34 mit dem einen Anschluss 4 und mit der zentralen Öffnung 14 des Rings 16 des Rahmens 10 des Filtereinsatzes 8 koaxial kommuniziert (Fig.1).

Im eingebauten Zustand des Ventillippenträgers 34 wirkt bevorzugt eine radial äußere Umfangsfläche 30 des am Kopfende des Filtereinsatzes 8 angeordneten Rings 16 als Ventilsitz des einen Ventils 22 mit der einen Ventillippe 26 (Fig.1 und Fig.3) und dessen radial innere Umfangsfläche 32 als Ventilsitz des anderen Ventils 24 mit der anderen Ventillippe 28 (Fig.4) zusammen.

Die durch die Ventillippen 26, 28 verursachte Öffnungs- und Schließbewegung der beiden Ventile 22, 24 beruhen einzig auf der Elastizität bzw. geometrischen Gestaltung der Ventillippen 26, 28, derart, dass die Ventillippen 26, 28 durch einen entsprechend hohen, im wesentlichen senkrecht zu ihrer axialen Erstreckung wirkenden Druck ähnlich wie bei einem Kragbalken elastisch gebogen werden, um vom jeweiligen Ventilsitz 30, 32 abzuheben und einen Strömungsquerschnitt freizugeben. Wenn dann der Druck sinkt, verformen sich die Ventillippen 26, 28 aufgrund ihrer Elastizität wieder in ihren Ausgangslage zurück, in welcher sie gegen den jeweiligen Ventilsitz 30, 32 dichten.

Der Fachmann wählt daher Material und Geometrie der Ventillippen 26, 28 bzw. des Ventillippenträgers 34 derart, dass die Ventillippen 26, 28 bei Überschreiten des vorgegebenen Werts des Drucks durch den auf sie wirkenden, infolge der Verunreinigung des Filtereinsatzes entstehenden Druck oder Staudruck an dem jeweiligen Anschluss 4, 6 vom zugeordneten Ventilsitz 30, 32 abheben und bei Druckabsenkung unter diesen vorgegebenen Wert wieder in ihre gegen den jeweiligen Ventilsitz 30, 32 dichtende Ausgangslage zurückfedern.

Die Wirkungsweise des Filtereinsatzes 8 bei Durchströmung von dem einen Anschluss 4 zu dem anderen Anschluss 6 ist dann wie folgt:
Bei Durchströmung des Kupplungskopfes 1 und des Filtereinsatzes 8 bleiben eventuelle Verunreinigungen im Inneren des Filtereinsatzes 8 hängen, so dass gereinigte Luft den anderen Anschluss 6 verlässt. Übersteigt die Verunreinigung des Filtereinsatzes 8 ein vorgegebenes Maß, wird also der Luftdurchgang stark gedrosselt oder gar ganz unterbrochen, dann entsteht in der zentralen Öffnung 40 des Ventillippenträgers ein oberhalb des betriebsüblichen Staudrucks liegender Staudruck der Druckluft, welcher bewirkt, dass die radial äußere Ventillippe 26 von der radial äußeren Umfangsfläche 30 des Rings 16 des Rahmens 10 des Filtereinsatzes 8 abhebt und einen gewissen Strömungsquerschnitt freigibt, welcher in den den Filtereinsatz 8 radial umschließenden Ringkanal 20 mündet, der wiederum mit dem anderen Anschluss 6 in Strömungsverbindung steht, um eine Kurzschluss- bzw. Bypassverbindung zwischen den beiden Anschlüssen 4, 6 herzustellen.

Diese Durchströmung des Kupplungskopfes 1 ist in Fig.3 durch die Pfeile 42 veranschaulicht. Die Druckluftversorgung des an den anderen Anschluss 6 angeschlossenen Druckluftvorrats oder die Funktion der an den anderen Anschluss 6 angeschlossenen Bremsleitung bleiben dann sichergestellt. Demgegenüber bleibt das andere Ventil 24 geschlossen, weil auf die andere Ventillippe 28 vom Anschluss 4 her Druck von radial innen wirkt und sie damit gegen den zugeordneten Ventilsitz 32 dichtend gepresst wird, wie anhand von Fig.4 leicht vorstellbar ist.

Bei umgekehrter Strömungsrichtung, also bei Anströmung über den anderen Anschluss 6 und bei Energieabfluss von dem einen Anschluss 4 ist ebenfalls eine Durchströmung des Kupplungskopfes 1 sichergestellt, wenngleich in der entgegen gesetzten Richtung.

Denn bei einer sehr starken Drosselung oder bei einem Verschluss des Durchgangs durch den Filtereinsatz 8 wird der Staudruck vor der inneren Ventillippe 28 so groß, dass diese von der radial inneren Umfangsfläche 32 des am Kopfende angeordneten Rings 16 des Filtereinsatzes 8 abhebt und wiederum einen bestimmten Strömungsquerschnitt freigibt, welcher den den Filtereinsatz 8 radial umschließenden und mit dem anderen Anschluss 6 kommunizierenden Ringkanal 20 im Gehäuse 2 über die zentrale Öffnung 40 im Ventillippenträger 34 mit dem einen Anschluss 4 verbindet, wie insbesondere die die Durchströmung des Kupplungskopfes 1 veranschaulichenden Pfeile 44 in Fig.4 zeigen. Hierdurch wird eine Kurzschluss- oder Bypassverbindung zwischen dem anderen Anschluss 6 und dem einen Anschluss 4 freigegeben. In diesem Fall kann die Druckluft von dem anderen Anschluss 6 ungereinigt in den einen Anschluss 4 gelangen und wird von dort über den Gegenkupplungskopf weiter geleitet. Demgegenüber bleibt das eine Ventil 22 geschlossen, weil auf die eine Ventillippe 26 vom Anschluss 6 und vom Ringkanal 20 her Druck von radial außen wirkt und sie damit gegen den zugeordneten Ventilsitz 30 dichtend gepresst wird, wie anhand von Fig.1 und Fig.3 leicht vorstellbar ist.

Die Betrachtungsweise der Anschlüsse 4, 6 als Energiezufluss bzw. als Energieabfluss hängt von dem Betriebszustand ab. Wenn der Kupplungskopf 1 in einer Vorratsleitung verwendet wird, weist die Strömungsrichtung von dem einen Anschluss 4 zu dem anderen Anschluss 6. Jedoch kann auch die umgekehrte Strömungsrichtung auftreten, wenn der Vorratsdruck des Zugfahrzeugs aus irgendwelchen Gründen kleiner als der Vorratsdruck des Anhängers ist. Wird der Kupplungskopf in einer Bremsleitung verwendet, so weist die Strömungsrichtung beim Bremsen von dem einen Anschluss 4 zu dem anderen Anschluss 6, beim Lösen der Bremsen in die Gegenrichtung, nämlich von Anschluss 6 zu Anschluss 4.

### Bezugszeichenliste

- 1: Kupplungskopf
- 2: Gehäuse
- 4: Anschluss
- 6: Anschluss
- 8: Filtereinsatz
- 10: Rahmen
- 12: Sieb
- 14: Öffnung
- 16: Ring
- 18: Sackloch
- 20: Ringkanal
- 22: Ventil
- 24: Ventil
- 26: Ventillippe
- 28: Ventillippe
- 30: Ventilsitz
- 32: Ventilsitz
- 34: Ventillippenträger
- 36: Deckel
- 40: Öffnung
- 42: Pfeile
- 44: Pfeile

## Patentansprüche

1. Kupplungskopf (1) zur pneumatischen Verbindung der Bremsanlagen eines Zugfahrzeugs und eines Anhängers, mit einer Filtereinrichtung zur Filterung von zwischen zwei Anschlüssen (4, 6) strömender Druckluft, welche einen im Gehäuse (2) des Kupplungskopfes (1) integrierten Filtereinsatz (8) sowie eine Ventileinrichtung (22, 24) aufweist, welche bei einer ein vorgegebenes Maß von Verunreinigung übersteigenden Verunreinigung des Filtereinsatzes (8) eine Bypassverbindung zwischen den beiden Anschlüssen (4, 6) unter Umgehung des Filtereinsatzes (8) herstellt, **dadurch gekennzeichnet, dass** die Ventileinrichtung (22, 24) wenigstens eine mit einem Ventilsitz (30, 32) zusammen wirkende elastische Ventillippe (26, 28) beinhaltet, welche bei durchgängigem Filtereinsatz (8) gegen den Ventilsitz (30, 32) dichtet und welche bei einer das vorgegebene Maß von Verunreinigung übersteigenden Verunreinigung des Filtereinsatzes aufgrund elastischer Verformung bedingten Abhebens vom Ventilsitz (30, 32) einen Strömungsquerschnitt für die Druckluft freigibt.

2. Kupplungskopf nach Anspruch 1, **dadurch gekennzeichnet, dass** der wenigstens eine Ventilsitz (30, 32) an einem Rahmen (10) des Filtereinsatzes (8) ausgebildet ist.

3. Kupplungskopf nach Anspruch 1 oder 2, **dadurch gekennzeichnet, dass** die Ventileinrichtung wenigstens zwei Ventile (22, 24) aufweist, wobei das eine Ventil (22) eine Ventillippe (26) beinhaltet, um eine Bypassverbindung zwischen dem einen Anschluss (4) und dem anderen Anschluss (6) herzustellen und das andere Ventil (24) eine andere Ventillippe (28), um in einer demgegenüber entgegen gesetzten Strömungsrichtung eine Bypassverbindung zwischen dem anderen Anschluss (6) und dem einen Anschluss (4) herzustellen.

4. Kupplungskopf nach Anspruch 3, **dadurch gekennzeichnet, dass** die eine Ventillippe (26) und die andere Ventillippe (28) mit einem ringförmigen Ventillippenträger (34) aus Elastomer einstückig ausgebildet sind und von einer zum Filtereinsatz (8) weisenden Stirnfläche des Ventillippenträgers (34) senkrecht weg ragen.

5. Kupplungskopf nach Anspruch 4, **dadurch gekennzeichnet, dass** der Rahmen (10) des Filtereinsatzes (8) einen kopfseitigen Ring (16) aufweist, dessen radial äußere Umfangsfläche als Ventilsitz (30) mit der einen Ventillippe (26) des einen Ventils (22) und dessen radial innere Umfangsfläche als Ventilsitz (32) mit der anderen Ventillippe (28) des anderen Ventils (24) zusammen wirkt.

6. Kupplungskopf nach Anspruch 5, **dadurch gekennzeichnet, dass** bezogen auf den Ventillippenträger (34) die eine Ventillippe (26) des einen Ventils (22) eine radial äußere Ventillippe und die andere Ventillippe (28) des anderen Ventils (24) eine radial innere Ventillippe ist, wobei die Ventillippen (26, 28) in Umfangsrichtung gesehen kreisbogenförmig ausgebildet sind.

7. Kupplungskopf nach Anspruch 5 oder 6, **dadurch gekennzeichnet, dass** eine zentrale Öffnung (40) des ringförmigen Ventillippenträgers (34) koaxial mit dem einen Anschluss (4) und dem Ring (16) des Rahmens (10) des Filtereinsatzes (8) angeordnet ist

8. Kupplungskopf nach Anspruch 7, **dadurch gekennzeichnet, dass** der Filtereinsatz (8) in einem Sackloch (18) des Gehäuses (2) gehalten ist, in welches der andere Anschluss (6) seitlich mündet, wobei zwischen einer radial äußeren Umfangsfläche des Filtereinsatzes (8) und einer radial inneren Umfangsfläche des Sacklochs (18) ein Ringkanal (20) ausgebildet ist, welcher mit dem anderen Anschluss (6) kommuniziert.

9. Kupplungskopf nach Anspruch 8, **dadurch gekennzeichnet, dass** bei von dem einen Ventilsitz (30) abgehobener Ventillippe (26) des einen Ventils (22) der eine Anschluss (4) über den Ringkanal (20) mit dem anderen Anschluss (6) und bei von dem anderen Ventilsitz (32) abgehobener Ventillippe (28) des anderen Ventils (24) der andere Anschluss (6) über den Ringkanal (20) mit dem einen Anschluss (4) in Strömungsverbindung steht.

10. Kupplungskopf nach einem der Ansprüche 5 bis 9, **dadurch gekennzeichnet, dass** der Ventillippenträger (34) zwischen dem kopfseitigen Ring (16) des Filtereinsatzes (8) und einem Deckel (36) des Gehäuses eingespannt gehalten ist.

## Claims

1. Coupling head (1) for the pneumatic connection of braking systems on a tractor vehicle and a trailer, comprising a filter means for filtering compressed air flowing between two ports (4, 6), which comprises a filter insert (8) integrated into the housing of said coupling head (1) as well as a valve means (22, 24) that establishes a bypass connection between said two ports (4, 6), bypassing said filter insert (8), in case of a contamination of said filter insert (8) exceeding a predetermined degree of contamination, **characterised in that** said valve means (22, 24) includes at least one resilient valve lip cooperating with a valve seat (30, 32), which ensures the sealed condition against said valve seat (30, 32) in case of a continuous filter insert (8) and which releases a flow cross-section for the compressed air in case of lifting from said valve seat, caused on account of elastic deformation, in the event of a contamination of said filter insert, which exceeds said predetermined measure of contamination.

2. Coupling head according to Claim 1, **characterised in that** said at least one valve seat (30, 32) is formed at a frame (10) of said filter insert (8).

3. Coupling head according to Claim 1 or 2, **characterised in that** said valve means comprises at least two valves (22, 24), whereof one valve (22) includes a valve lip (26) for establishing a bypass connection between said first port (4) and said other port (6), whereas said other valve (24) includes another valve lip (28) for establishing a bypass connection between said other port (6) and said first port (4), in a flow direction opposite to the first one.

4. Coupling head according to Claim 3, **characterised in that** said first valve lip (26) and said other valve lip (28) are configured integrally with an annular valve lip support (34) and project in a direction orthogonal on a face of said valve lip support, which is oriented towards said filter insert (8).

5. Coupling head according to Claim 4, **characterised in that** said frame (10) of said filter insert (8) comprises a ring (16) on the side of the head whose radially outside peripheral surface cooperates as valve seat (30) with said first valve lip (26) of said first valve (22), whereas its radially interior peripheral surface cooperates as valve seat (32) with said other valve lip (28) of said other valve (4).

6. Coupling head according to Claim 5, **characterised in that**, relatively to said valve lip support (34), said first valve lip (26) of said first valve (22) is a radially outside valve lip, whereas said other valve lip (28) of said other valve (24) is a radially inside valve lip, with said valve lips (26, 28) being configured in the form of a circular arc, when seen along the peripheral direction.

7. Coupling head according to Claim 5 or 6, **characterised in that** a central aperture (40) of said annular valve lip support (34) is arranged coaxially, relatively to said first port (4) and said ring (16) of said frame (10) of said filter insert (8).

8. Coupling head according to Claim 7, **characterised in that** said filter insert (8) is retained in a blind hole (18) of said housing (2), into which opens said other port (6) laterally, with an annular passage (20) being formed between a radially outside peripheral surface of said filter insert (8) and a radially inside peripheral surface of said blind hole (18), which communicates with said other port (6).

9. Coupling head according to Claim 8, **characterised in that** when said valve lip (26) of said first valve (22) is lifted from said first valve seat (30), said first port (4) is in flow communication via said annular passage (20) with said other port (6), and when said valve lip (28) of said other valve (24) is lifted from said other valve seat (32), said other port (6) is in flow communication via said annular passage (20) with said first port (4).

10. Coupling head according to any of the Claims 5 to 9, **characterised in that** said valve lip support (34) is held in a clamped condition between said ring (16) on the head side of said filter insert (8) and a cover (36) of said housing.

## Revendications

1. Tête d'accouplement (1) pour la liaison pneumatique des systèmes de freinage d'un véhicule tracteur et d'une remorque, comprenant un moyen de filtrage pour le filtrage de l'air comprimé s'écoulant entre deux raccords (4, 6), qui est doté d'un insert filtrant (8) intégré dans le carter 82) de la tête d'accouplement ainsi qu'un moyen à soupape (22, 24), qui établit une liaison de dérivation entre lesdits deux raccords (4, 6), en contournant ledit insert filtrant (8), à une contamination dudit insert filtrant (8) dépassant un degré de contamination défini, **caractérisé en ce que** ledit moyen à soupape (22, 24) renferme au moins une lèvre de soupape élastique, qui interagit avec une siège de soupape (30, 32), qui établit l'étanchéité contre ladite siège de soupape (30, 32) au cas d'un élément filtrant (8) acheminant et qui libère une section transversale d'écoulement pour l'air comprimé au cas de soulevage de ladite siège de soupape (30, 32), causé par une déformation élastique, au cas d'une contamination dudit élément filtrant, qui dépasse un degré de contamination défini.

2. Tête d'accouplement selon la revendication 1, **caractérisé en ce que** ladite au moins une siège de soupape (30, 32) est formée à un cadre (10) dudit élément filtrant (8).

3. Tête d'accouplement selon la revendication 1 ou 2, **caractérisé en ce que** ledit moyen à soupape comprend au moins deux soupapes (22, 24), dont une soupape (22) renferme une lèvre de soupape (26) afin d'établir une liaison de dérivation entre ledit premier raccord (4) et ledit autre raccord (6), pendant que l'autre soupape (24) renferme une autre lèvre de soupape (28) afin d'établir une liaison de dérivation entre ledit autre raccord (6) et ledit premier raccord (4), en une direction d'écoulement opposée à la première direction..

4. Tête d'accouplement selon la revendication 3, **caractérisé en ce que** ladite première lèvre de soupape (26) et ladite autre lèvre de soupape (28) sont configurées en une seule pièce à un support annulaire de lèvre de soupape (34) et font saillie en sens orthogonal relativement à une face dudit support de lèvre de soupape, qui s'étend vers ledit élément filtrant (8).

5. Tête d'accouplement selon la revendication 4, **caractérisé en ce que** ledit cadre (10) dudit élément filtrant (8) comprend un anneau (16) du côté de la tête, dont l'surface périphérique radialement extérieure coopère en tant que siège de soupape (30) avec ladite première lèvre de soupape (26) de ladite première soupape (22), pendant que son surface périphérique radialement intérieure coopère en tant que siège de soupape (32) avec ladite autre lèvre de soupape (28) de ladite autre soupape (4).

6. Tête d'accouplement selon la revendication 5, **caractérisé en ce que**, relativement audit support de lèvre de soupape (34), ladite première lèvre de soupape (26) de ladite première soupape (22) est une lèvre de soupape radialement extérieure, pendant que ladite autre lèvre de soupape (28) de ladite autre soupape (24) est une lèvre de soupape radialement intérieure, auxdites lèvres de soupape (26, 28) présentant une configuration en arc de cercle, vue en direction périphérique.

7. Tête d'accouplement selon la revendication 5 ou 6, **caractérisé en ce qu'**une ouverture centrale (40) dudit support annulaire de lèvre de soupape (34) est disposée en position coaxiale relativement audit premier raccord (4) et dudit anneau (16) dudit cadre (10) dudit élément filtrant (8).

8. Tête d'accouplement selon la revendication 7, **caractérisé en ce que** ledit élément filtrant (8) est retenu dans un trou borgne (18) dudit carter (2), dans lequel s'ouvre ledit autre raccord (6) latéralement, à un canal annulaire(20) étant formé entre une surface périphérique radialement extérieure dudit élément filtrant (8) et une surface périphérique radialement intérieure dudit trou borgne (18), lequel se trouve en communication avec ledit autre raccord (6).

9. Tête d'accouplement selon la revendication 8, **caractérisé en ce que** quand ladite lèvre de soupape (26) de ladite première soupape (22) est soulevée de ladite première siège de soupape (30), ledit premier raccord (4) se trouve en communication fluidique via ledit canal annulaire (20) avec ledit autre raccord (6), et quand ladite lèvre de soupape (28) de ladite autre soupape (24) est soulevée de ladite autre siège de soupape (32), ledit autre raccord (6) se trouve en communication fluidique via ledit canal annulaire (20) avec ledit premier raccord (4).

10. Tête d'accouplement selon une quelconque des revendications 5 à 9, **caractérisé en ce que** ledit support de lèvre de soupape (34) est tenu en état de serrage entre ledit anneau (16) du côté de tête dudit élément filtrant (8) et un couvercle (36) dudit carter.
